# FASCICULE DE BREVET EUROPEEN

(11) **EP 4 634 556 B1**
(45) Date de publication et mention de la délivrance du brevet: **14.10.2026**
(21) Numéro de dépôt: 23838182.6
(22) Date de dépôt: 13.12.2023
(51) Int. Cl.: F16L 19/025, F16B 7/00, F16B 37/00, F16B 7/18, F16B 31/02, F16B 39/282

(54) **RACCORD A LIMITEUR DE COUPLE**
KUPPLUNG MIT DREHMOMENTBEGRENZER
COUPLING WITH A TORQUE LIMITER

(30) Priorité: 13.12.2022 FR 2213275; 12.12.2023 FR 2314002
(43) Date de publication de la demande: 22.10.2025
(73) Titulaire: Senior Aerospace Ermeto, 41330 Fosse (FR)
(72) Inventeur: JURION, Mathieu, 41330 FOSSE (FR); ROCHEREAU, Didier, 41330 FOSSE (FR)
(74) Mandataire: Eidelsberg, Olivier Nathan
(86) Numéro de dépôt international: PCT/FR2023/051997
(87) Numéro de publication internationale: WO 2024/126949

(56) Documents cités:
- EP-B1- 3 627 125
- WO-A1-2022/251078
- DE-T5- 112018 008 219

## Description

### DOMAINE DE L'INVENTION

La présente invention se rapporte à un raccord pour réunir deux conduites avec un couple de serrage prédéterminé comprenant un premier embout fixé à une première conduite, un deuxième embout fixé à une seconde conduite à réunir, le premier embout muni d'une collerette de prise d'outil étant terminé par un filetage et une surface d'étanchéité, le deuxième embout a une collerette terminée par une surface d'étanchéité destinée à être appliquée contre la surface d'étanchéité du premier embout, un écrou engagé librement sur le deuxième embout derrière sa collerette et vissé sur l'extrémité filetée du premier embout en tirant la collerette pour appliquer sa lèvre d'étanchéité contre la surface d'étanchéité du premier embout et réaliser l'étanchéité avec une contrainte déterminée.

### ETAT DE LA TECHNIQUE

Il est connu de serrer des raccords de deux conduites ou tuyaux avec une clef dynamométrique permettant de serrer avec un couple de serrage déterminé.

Toutefois, le respect du couple de serrage n'est pas toujours garanti et la clef dynamométrique est très encombrante pour le serrage d'un raccord dans un environnement contraint.

Le document DE 11 2018 008219 T5 montre une structure d'assemblage comprenant: un raccord, un écrou à sertir, un manchon cylindrique, une bague rotative et un élément de pression.

### BUT DE L'INVENTION

La présente invention a pour but de développer un moyen de serrage permettant de garantir la précision du serrage avec un couple de consigne sans utiliser de clef dynamométrique.

### EXPOSE ET AVANTAGES DE L'INVENTION

A cet effet, l'invention a pour objet un raccord du type défini ci-dessus caractérisé en ce qu'il comprend un écrou de base en forme de manchon ayant : à une extrémité, un taraudage pour se visser sur le segment fileté du premier embout, une surface d'appui à la suite du taraudage pour pousser la collerette du deuxième embout et presser sa lèvre contre la surface d'appui du premier embout, une couronne d'accrochage , extérieure, un palier et, un segment fileté à son extrémité, un écrou de serrage venant sur le palier lisse pour y tourner librement et ayant sur sa face tournée vers la couronne de l'écrou de base -une deuxième couronne destinée à venir contre la première couronne de l'écrou de base, sur sa face opposée une surface d'appui, un élément de ressort de compression appliqué contre la surface d'appui de l'écrou de serrage, un écrou de précontrainte vissé sur le segment fileté de l'écrou de base pour presser avec une précontrainte déterminée l'écrou de serrage contre la couronne d'accrochage de l'écrou de base par l'intermédiaire de l'élément de ressort de compression, la deuxième couronne d'accrochage étant reliée à la première couronne d'accrochage pour transmettre par contact le couple de serrage de l'écrou sur le premier embout jusqu'à un couple de consigne réglé par le serrage de l'élément de ressort de compression serrant élastiquement les deux surfaces d'accrochage.

Le raccord selon l'invention a l'avantage de permettre de raccorder deux conduites avec un couple de serrage de consigne fixés et réglés de manière précise.

Le raccord est en effet fourni à l'installateur avec le couple de consigne préréglé en usine et donc réglé de manière précise et vérifié, réglage sur lequel l'installateur ne peut intervenir sur ce réglage.

L'installateur ne peut que serrer le raccord à la limite du couple de consigne sans pouvoir dépasser cette limite.

Ce raccord offre ainsi une garantie importante pour les travaux en série et nécessitant une intervention rapide, répétée sur de multiples raccords et qui ne doivent pas être soumis aux aléas d'un serrage même si celui-ci est fait avec une clef dynamométrique.

Suivant une autre caractéristique avantageuse, la première couronne d'accrochage comporte un ensemble de rampes périphériques et la deuxième couronne d'accrochage comporte un ensemble de rampes périphériques, les deux couronnes sont complémentaires de façon à transmettre le couple de serrage exercé par l'écrou de serrage jusqu'au couple de consigne.

Suivant une caractéristique avantageuse, l'écrou de base a un segment fileté après le palier lisse recevant l'organe de serrage,
L'organe de précontrainte est vissé sur le segment fileté pour être solidarisé de l'écrou de base et,
Le ressort de compression est entre l'organe de précontrainte et la face d'appui opposée à celle de la deuxième couronne d'accrochage.
Suivant une autre caractéristique avantageuse, l'écrou de base a une collerette dont la face tournée vers la face de l'organe de serrage forme une surface d'appui et cette surface d'appui et la surface d'appui de l'organe de serrage reçoivent entre elles le ressort de compression,
L'autre face de la collerette porte une première couronne d'accrochage et l'organe de serrage a un retour et passe autour du ressort de compression et de la collerette, ce retour venant contre la couronne d'accrochage de la face de la collerette.

Cette forme de raccord a l'avantage d'être particulièrement compacte par le regroupement du ressort de compression notamment formé par un empilage de ressorts Belleville.

Suivant une autre caractéristique, le retour de l'organe de serrage est un anneau démontable solidarisé à l'organe de serrage après la mise en place sur la partie lisse de l'écrou de serrage et la mise en place du ressort en précontrainte entre la face de l'organe de serrage et la face de la collerette.

Suivant une autre caractéristique, la surface d'étanchéité du deuxième embout est une lèvre d'étanchéité ou une surface conique et la surface d'étanchéité du premier embout est une surface plane ou une surface conique.

Suivant une autre caractéristique avantageuse, l'organe de serrage est en forme d'écrou chapeau dont la surface de prise d'outil coiffe l'élément de ressort de compression et l'organe de précontrainte. Cela protège ces éléments et aussi interdit toute intervention directe par un outil dans l'intervalle entre l'élément de ressort de compression et l'écrou de précontrainte.

De plus et de manière avantageuse, l'écrou de précontrainte a une surface de prise d'outil qui n'est pas accessible à un outil habituel mais un outil spécialement conçu pour cette application particulière pour éviter toute intervention sur le réglage du couple de consigne du sous-ensemble formé par l'écrou de base, l'organe de serrage, l'élément de ressort de compression et l'écrou de précontrainte qui est serti après le réglage sur la partie filetée du manchon. Il est avantageux de pouvoir vérifier la bonne exécution du serrage puisqu'il suffit à la personne qui vérifie le serrage de serrer une nouvelle fois l'écrou de serrage.

Cette protection est indispensable pour garantir la fiabilité de ce raccord, c'est-à-dire la conformité du raccord à ses paramètres du signe.

Suivant une autre caractéristique avantageuse, l'élément de ressort de compression est un ressort Belleville ou une pile de ressort Belleville.

### BREVE DESCRIPTION DES DESSINS

La présente invention sera décrite ci-après de manière plus détaillée à l'aide d'un mode de réalisation d'un raccord représenté dans les dessins annexés dans lesquels :
[Fig. 1] vue de côté et une vue en coupe axiale du raccord selon l'invention,
[Fig. 2] vue en demi-coupe axiale des composants du raccord selon l'invention,
[Fig. 3] vue de côté et vue en perspective d'un écrou de base,
[Fig. 4] vue en perspective selon deux directions diamétralement opposées de l'écrou de serrage,
[Fig. 5] vue en coupe axiale d'un deuxième mode de réalisation du raccord,
[Fig. 6] vue en demi-coupe axiale éclatée du raccord de la figure 5,
[Fig. 6A] vue en demi-coupe axiale assemblée du raccord de la figure 5,
[Fig. 7] vue en coupe axiale d'une variante du deuxième mode de réalisation,
[Fig. 8] vue isométrique du raccord du second mode de réalisation.

### DESCRIPTION D'UN MODE DE REALISATION DE L'INVENTION

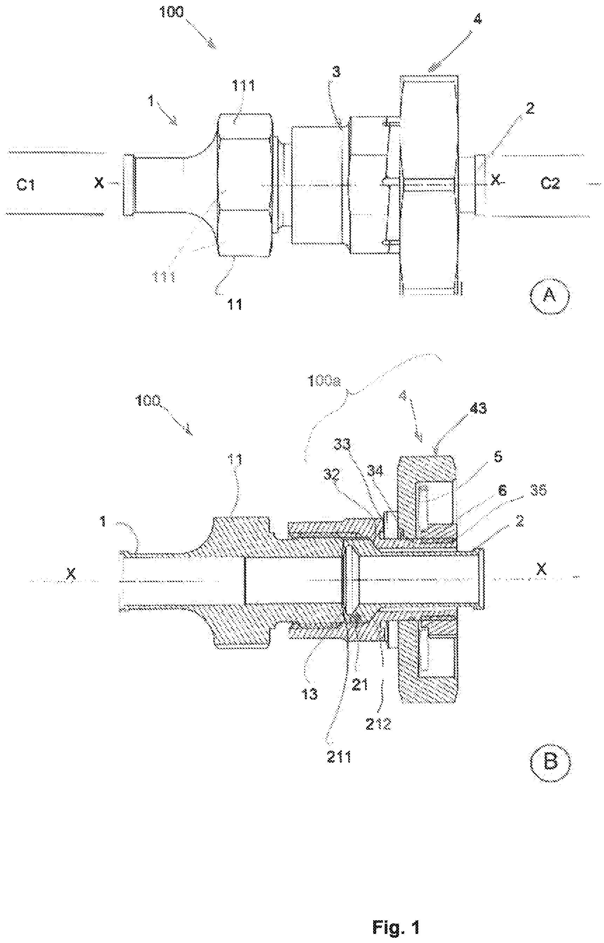

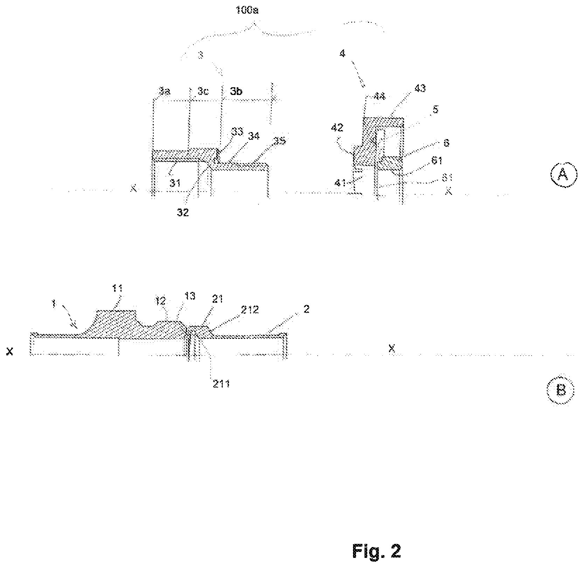

Selon les figures 1 et 2, l'invention a pour objet un raccord 100 destiné à réunir deux conduites C1, C2 avec un couple de serrage prédéterminé (couple de consigne CS).

Ce raccord 100 d'axe XX se compose d'un premier embout 1 destiné à être fixé à une première conduite C1 et d'un second embout 2 destiné à être fixé à l'autre conduite C2 à réunir par le raccord et comprenant en outre un écrou de base 3 et un organe de serrage 4.

L'écrou de base 3 est emmanché sur le deuxième embout 2 et il porte l'organe de serrage 4 pour entraîner l'écrou de base 3 avec le deuxième embout 2 et serrer celui-ci contre le premier embout 1 avec un couple de serrage de consigne CS ; le couple de serrage appliqué à l'organe de serrage 3 ne peut dépasser ce couple de consigne.

Le premier embout 1 en forme de manchon est muni sur sa surface extérieure d'une couronne d'écrou 11 formant une surface de prise d'outil, par exemple, un profil hexagonal à facettes 111, comme cela est habituel pour les éléments à visser.

Ce premier embout 1 se termine à son autre extrémité par un filetage 12 et une surface d'étanchéité 13 dans un plan perpendiculaire à l'axe XX.

L'écrou de base 3 est destiné à être vissé sur l'embout 1 en tirant et pressant le deuxième embout 2 par sa collerette 21 pour appuyer sa surface d'étanchéité 211 en forme de lèvre contre la surface d'étanchéité 13 du premier raccord 1.

L'écrou de base 3 est formé de deux manchons cylindriques 3a, 3b reliés par une couronne 3c. Le manchon 3a destiné à se visser sur l'embout 1 a un diamètre intérieur correspondant au diamètre extérieur du premier embout 1.

Le manchon 3b destiné à coiffer le deuxième embout 2 a un diamètre intérieur correspondant, au jeu près, au diamètre extérieur de l'embout 1 sur lequel il est emmanché.

La différence des diamètres de l'écrou de base 3 correspond au relief formé par la collerette 21 de l'embout 2 et à l'épaisseur de l'embout 1 formant la surface d'appui 13.

La réunion des deux surfaces intérieures des manchons 3a, 3b forme une surface d'appui 32 conique ou plane correspondant à la forme du côté 212 de la collerette 21 contre lequel pousse l'écrou 3.

La jonction 3c des deux manchons 3a, 3b chevauche la surface d'appui 32 et porte une couronne d'accrochage 33. Au-delà de cette couronne d'accrochage 33, le manchon 3b a une surface lisse formant par un palier 34 et ensuite un segment fileté 35.

L'organe de serrage 4 destiné à coopérer avec l'écrou de base 3 est en forme de roue avec un orifice central 41 pour s'appuyer sur le palier 34 de l'écrou de base 3. Sur sa face tournée vers l'écrou 3, il a une couronne d'accrochage 42 pour coopérer avec la première couronne d'accrochage 33 de l'écrou de base 3 ; le bord extérieur de l'organe de serrage 4 est une surface de prise d'outil 43, par exemple, à facettes pour un contour de prise d'outil hexagonal.

La surface de l'organe de serrage 4, à l'opposé de celle de la (deuxième) couronne d'accrochage 42 est une surface d'appui 43 pour un ressort de compression 5 entourant le palier 34 de l'écrou 3.

L'élément de ressort de compression 5 est pris en sandwich entre la surface d'appui 43 et un organe de précontrainte 6 pour être vissé sur le segment fileté 35 de l'écrou de base 3 et serrer le ressort 5 contre l'organe de serrage 3 et ainsi la deuxième couronne d'accrochage 41 contre la première couronne d'accrochage 33.

L'écrou de précontrainte 6 est protégé et ne comporte pas de surface de prise d'outil autre que la prise d'outil spéciale, non représentée, utilisée pour le réglage du couple de consigne CS en usine. L'écrou peut être immobilisé par sertissage ou autre solution mécanique après le réglage en usine.

Comme le montre la vue en coupe de la partie B de la figure 1, l'écrou de serrage 4 est un écrou chapeau qui couvre à la fois le ressort de compression 5 et l'écrou de précontrainte 6 de façon à éviter tout déréglage du couple de serrage de consigne.

La manœuvre de l'écrou de précontrainte 6 nécessite un outil avec une prise particulière, par exemple, une clef à broche venant s'accrocher dans deux perçages diamétraux réalisés dans la face extérieure de l'écrou de précontrainte 6.

Le sous-ensemble 100a du raccord 100 comprenant l'écrou 3, l'organe de serrage 4, le ressort de compression 5 et l'écrou de précontrainte 6 est préréglé au couple de serrage de consigne CS. L'assemblage des conduites C1, C2 par le raccord 100 consiste à fixer les deux embouts 1, 2 à l'extrémité respective des conduites C1, C2 puis à visser le sous-ensemble 100a (emmanché sur l'embout 2 avant la fixation de celui-ci à la conduite C2), sur le segment fileté 12 de l'embout 1. Le premier embout 1 est tenu par un outil appliqué à sa surface de prise d'outil 11 et le sous-ensemble 100a est manœuvré en utilisant sa surface de prise d'outil 43. Le mouvement de vissage se poursuit jusqu'à ce que les couronnes radiales d'accrochage 33, 42 patinent et ne transmettent plus de couple supérieur au couple de serrage de consigne CS. De manière avantageuse, les dents formées par les couronnes d'accrochage permettent le desserrage sans limitation de couple puisque dans le sens de dévissage de l'écrou de serrage, les dents s'entraînent par les crans formés par les faces verticales des dents.

Le serrage du raccord 100 est fait par le vissage de l'écrou de base 3 sur le segment fileté 12 du premier embout 1, en étant entraîné en rotation pour son vissage par l'organe de serrage 4 monté libre en rotation sur un palier 34 et coopérant par sa surface d'accrochage 42 avec la première surface d'accrochage 33 de l'écrou de base 3. L'organe de serrage 4 est poussé contre l'écrou de base 3 par l'élément de ressort de compression 5 lui-même poussé par l'écrou de précontrainte 6 vissé par son taraudage 61 sur l'écrou de base 3. Le serrage du ressort de compression 5 par le vissage réglé de l'écrou de précontrainte 6 permet de régler le couple de consigne CS jusqu'auquel l'écrou de serrage 4 entraîne l'écrou de base 3 pour son vissage sur le premier embout 1.

Le serrage de l'écrou de base 3 sur l'embout 1 peut se faire jusqu'à atteindre le couple de consigne fixé par l'écrou de précontrainte 6 et le ressort de compression 5.

Pour ce serrage, l'embout 1 est tenu avec un outil appliqué à sa surface de prise d'outil 11, par exemple, comme indiqué, une surface hexagonale à facettes 111 ou méplats. Comme le montre la partie A de la figure 1, l'extrémité de l'écrou de base 3 avec sa couronne à facettes 36 porte la couronne d'accrochage.

Il est à remarquer que l'écrou 4 permet de desserrage.

Le premier embout 1 comporte une collerette avec une surface périphérique de prise d'outil 11, par exemple, une structure hexagonale à facettes 111.

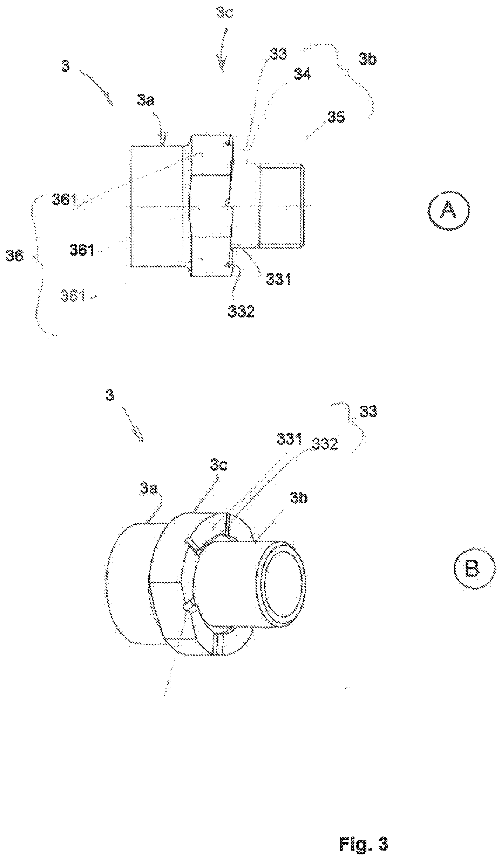

La figure 3 montre, par une vue de côté et une vue en perspective, la structure de l'écrou de base 3 et de ses différentes parties visibles de l'extérieur telles que le manchon 3a muni du taraudage 31, d'un côté de la couronne 36 à facettes 361 portant la couronne d'accrochage 33 ; celle-ci est suivie d'une surface lisse formant le palier 34 et ensuite d'un segment fileté 35.

La surface d'accrochage 33 est composée de facettes identiques 331, en forme de rampes laissant entre elles des surfaces radiales formant des crans de dévissage 332.

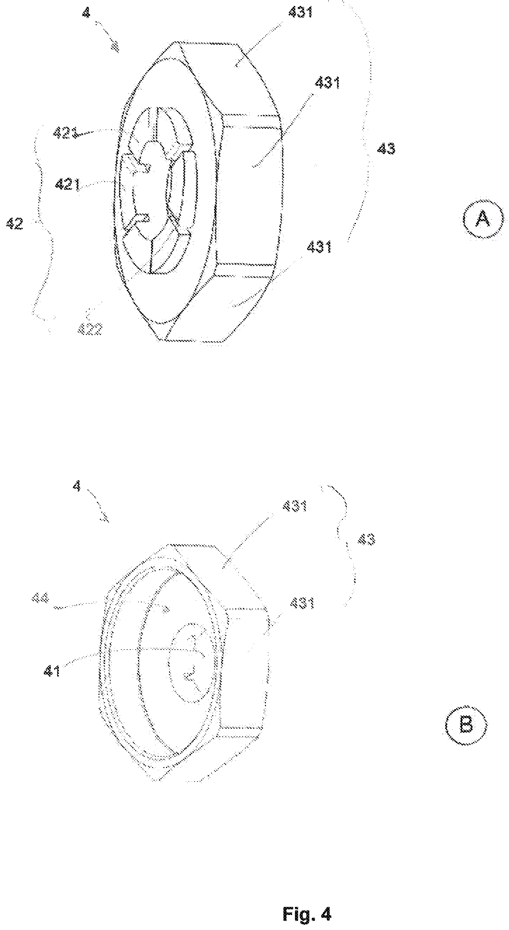

La figure 4 montre dans ses deux vues A et B la forme de l'organe de serrage 4 qui a une surface de prise d'outil 41 en forme d'écrou hexagonal à facettes 431. Cet organe 4 se place sur la surface de palier 34. Cette position montre la face de l'organe 4 a une couronne d'accrochage 42 constituée par une succession d'éléments en forme de rampe 421, de pente opposée selon la direction axiale XX à celle de la couronne d'accrochage 33 de l'écrou de base 3. Les extrémités en saillie des rampes 421 se terminent par des surfaces radiales formant des crans 422 coopérant avec ceux des rampes de la couronne d'accrochage 33 pour le dévissage. Lorsque l'organe de serrage 4 est tourné dans le sens des aiguilles d'une montre, le glissement des rampes 421 sur les rampes 331 de l'écrou de base 3 se traduit par une poussée de la droite vers la gauche qui entraîne la collerette 21 du second embout 2 et pousse sa lèvre d'étanchéité 211 contre la surface d'appui 13 du premier embout 1.

Le desserrage du raccord peut se faire par le contact des crans 422 des rampes 421.

Selon une variante avantageuse, les facettes 361 de la couronne 36 et celle 431 de l'écrou de serrage 4 sont munies de repères dont l'association permet de vérifier de visu que le raccord 100 est bien serré. Il est particulièrement avantageux qu'en position serrée du raccord 100, une facette 361 munie d'un repère coïncide avec une facette 431 avec un repère.

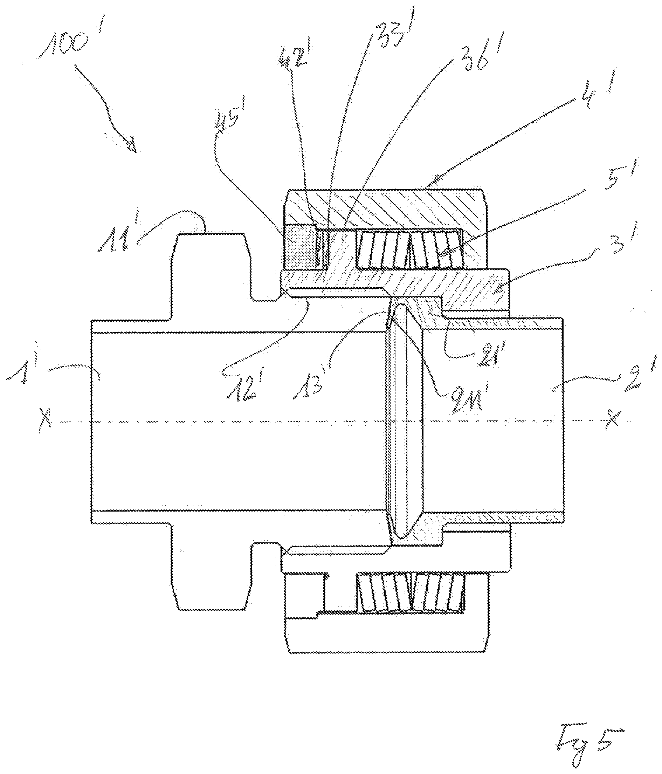

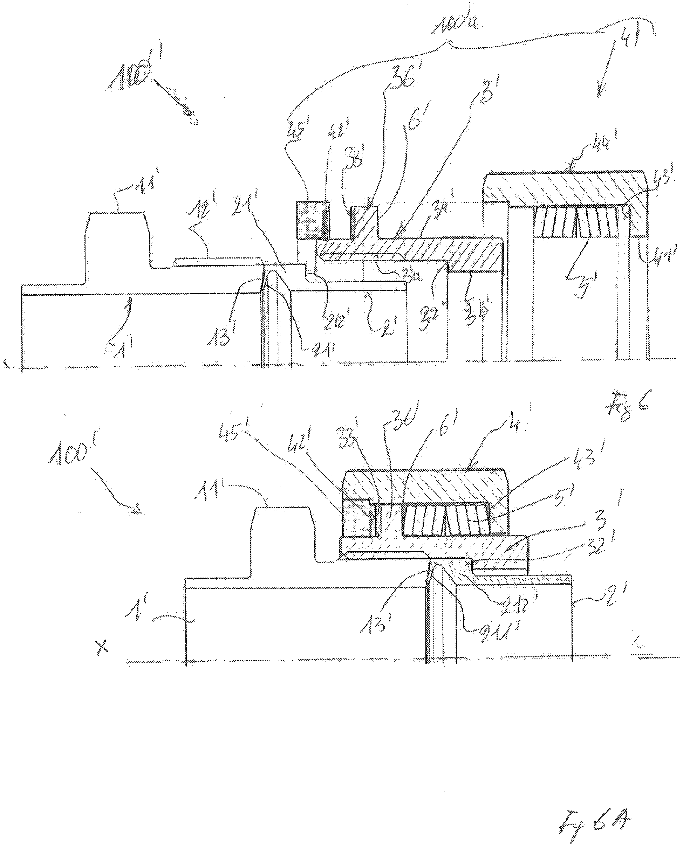

Les figures 5 et 6 montrent un deuxième mode de réalisation du raccord 100', destiné à réunir deux conduites avec un couple de serrage prédéterminé (couple de consigne CS).

Ce raccord 100' d'axe XX se compose d'un premier embout l' fixé à une conduite et d'un second embout 2' fixé à une autre conduite et comprenant un écrou de base 3' et un organe de serrage 4'.

L'écrou de base 3' emmanché sur le deuxième embout 2' porte l'organe de serrage 4' pour entraîner l'écrou de base 3' avec le deuxième embout 2' et serrer celui-ci contre le premier embout l' avec le couple de serrage de consigne CS.

Le premier embout l' en forme de manchon est muni sur sa surface extérieure d'une couronne d'écrou 11' formant une surface de prise d'outil, par exemple, un profil hexagonal à facette.

Le premier embout l' se termine à son autre extrémité par un filetage 12' et une surface d'étanchéité 13' dans un plan perpendiculaire à l'axe XX.

De façon plus détaillée, selon la vue éclatée de la figure 6, l'écrou de base 3' est vissé sur l'embout 1' en tirant et en pressant le deuxième embout 2' par sa collerette 21' pour appuyer sa surface d'étanchéité 211' en forme de lèvre contre la surface d'étanchéité 13' du premier raccord 1'.

L'écrou de base 3' est formé de deux parties cylindriques 3'a, 3'b portant une collerette 36'. La partie 3'a se visse sur l'embout 1'.

La partie 3b' coiffant le deuxième embout 2' à un diamètre intérieur correspondant au jeu près, au diamètre extérieur de l'embout.

La jonction des deux surfaces intérieures des parties 3'a, 3'b forme une surface d'appui 32' correspondant à la forme du côté 212' de la collerette 21' contre laquelle pousse l'écrou 3'.

L'écrou de base 3' a une collerette 36' avec une couronne d'accrochage 33' sur une face et une face tournée vers la face 43' de l'organe de serrage 4' forme une surface d'appui 6' ; les surfaces d'appui 6', 43' reçoivent entre elles le ressort 5'.

Avant la collerette 33', l'écrou a une surface lisse formant un palier 34' pour recevoir l'organe de serrage 4' d'un côté ; l'organe de serrage 4' a un orifice central 41' pour s'appuyer sur le palier lisse 34' et former une surface d'appui 43' pour le ressort 5' qui est un empilage de rondelles Belleville au diamètre du palier lisse 34' pour occuper librement l'espace entre le manchon de l'organe de serrage 4' qui forme la surface de prise 44' par exemple, une surface hexagonale.

L'extrémité de ce manchon, à l'opposé de l'orifice central 41' forme un retour 45'. Le retour 45' est un anneau détaché du manchon de l'organe 4' mais qui est solidarisé à l'état assemblé à l'organe de serrage 4' sur le manchon formé par l'écrou 3' au-delà de la collerette 36'.

L'anneau 45' a une couronne d'accrochage 42' face à la couronne d'accrochage 33' de la collerette 36' pour coopérer avec celle-ci dans le sens du vissage de l'écrou de base 3' sur le filetage 12' de l'embout l'a lorsqu'on entraîne l'organe de serrage 4' dans le sens du vissage. Cette liaison entre les couronnes 33'/42' lorsque l'organe de serrage est tourné en sens opposé se libère et permet le desserrage.

Le ressort de compression 5' formé par l'empilage de rondelles de Belleville s'appuie entre le côté 43' de l'organe de serrage 4' et le côté 6' de la collerette 36'.

Les surfaces d'accrochage non détaillées des couronnes d'accrochage 33'/42' sont des rampes comme celles du premier mode de réalisation (figure 3). Le serrage du raccord jusqu'au couple de serrage de consigne CS se déroule comme dans le premier mode de réalisation. Il en est de même du desserrage.

Vers la fin du serrage, l'écrou de serrage 3' reste quasi fixe, mais la poursuite du vissage, plus exactement du pivotement de l'organe de serrage 4' fait monter les rampes de la couronne d'accrochage 42' sur celles de la couronne d'accrochage 33' de sorte que la couronne d'accrochage et l'anneau 45' solidaire de l'organe de serrage 4' tirent l'anneau 45' vers la collerette 36' et comprime le ressort 5'. Lorsque le couple exercé tente de dépasser le couple de consigne CS, les rampes de la couronne d'accrochage 42' s'échappent et glissent sur celles de la couronne d'accrochage 33' ce qui coupe la transmission du couple de l'organe de serrage 3'.

Le fonctionnement est le même que celui du premier mode de réalisation, sauf que le mécanisme formé par les couronnes d'accrochage 33'/42' est à l'intérieur de l'organe de serrage 4' alors que dans le premier mode de réalisation, il est à l'extérieur.

Le deuxième mode de réalisation est plus ramassé et réduit le diamètre de l'ensemble.

Dans le premier mode de réalisation, le ressort de compression 5 pousse l'organe de serrage 4 pour bloquer entre elles les couronnes d'accrochage 33, 42 alors que dans le second mode de réalisation, le ressort de compression 5' tire l'organe de serrage 4' pour bloquer entre elles les couronnes d'accrochage 33'/42' ; dans les deux cas, pour le couple de serrage de consigne CS, les rampes des couronnes d'accrochage glissent les unes sur les autres et compriment le ressort 65' jusqu'à ce que le couple de vissage arrive au couple de consigne et comprime suffisamment le ressort de compression 5, 5' pour ouvrir la liaison entre les couronnes d'accrochage 33', 42'.

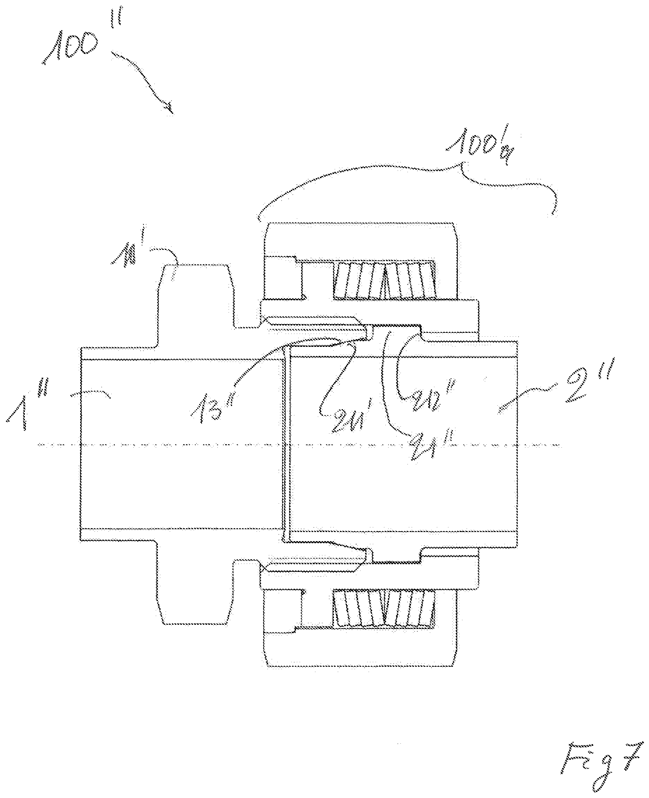

La figure 7 montre une variante du deuxième mode de réalisation portant sur la forme des surfaces de contact des deux embouts 1", 2". Les références à la figure 7 se limitent aux différences, c'est-à-dire les surfaces de contact 13" de l'embout 1" et 211" de l'embout 2". Le sous-ensemble 100'a est inchangé.

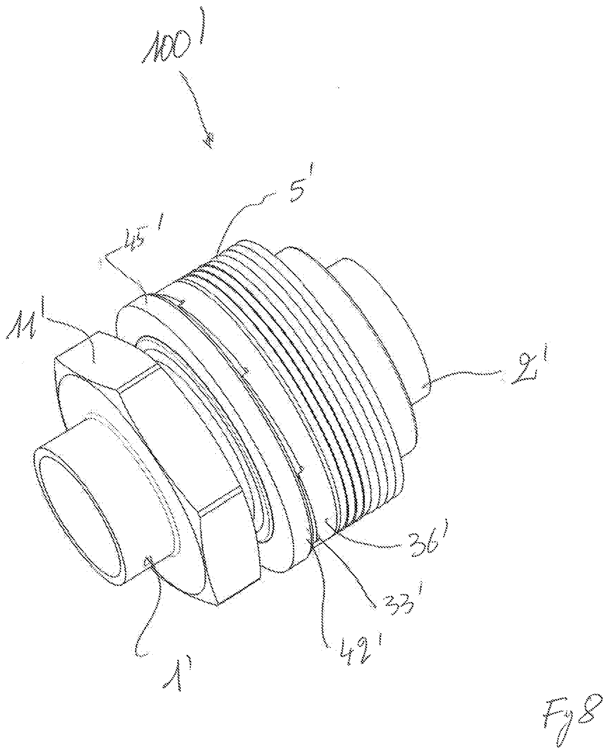

La vue isométrique de la figure 8 montre le raccord 100' sans l'organe de serrage 4' laissant apparaître les rondelles Belleville du ressort 5', la collerette 7' de l'organe de serrage 3 et les rampes des couronnes d'accrochage 33', 42'.

### NOMENCLATURE DES ELEMENTS PRINCIPAUX

### (sans les références avec « prime » sauf exception)

100 Raccord
100a Sous-ensemble de raccord
1 Premier embout
11 Surface de prise d'outil / collerette de prise d'outil
111 Facette
12 Segment fileté
13 Surface d'étanchéité
2 Deuxième embout
21 Collerette
211 Lèvre d'étanchéité / surface d'étanchéité
212 Surface d'appui conique
3 Ecrou de base
3a Manchon
3'a Partie de manchon
3'b Partie de manchon
3b Manchon
3c Jonction des manchons 3a, 3b
31 Taraudage
32 Surface d'appui
33 Première couronne d'accrochage
331 Rampes
332 Crans de dévissage
34 Palier lisse
35 Segment fileté
36 Couronne à facettes
361 Facette
4 Organe de serrage
41 Orifice central
42 Seconde couronne d'accrochage
421 Rampe
43 Surface d'appui
431 Facettes
432 Crans de dévissage
44 Surface de prise d'outil
5 Ressort de compression
51 Orifice central
6 Organe de précontrainte / écrou de précontrainte
61 Taraudage
C1 Conduite
C2 Conduite
XX Axe du raccord

## Revendications

1. Raccord (100) pour réunir deux conduites avec un couple de serrage prédéterminé comprenant
- un premier embout (1) adapté à être fixé à une première conduite (C1),
- un deuxième embout (2) adapté à être fixé à une seconde conduite (C2) à réunir,
- le premier embout (1) muni d'une collerette de prise d'outil (11) étant terminé par un filetage (12) et une surface d'étanchéité (13),
- le deuxième embout (2) a une collerette (21) terminée par une surface d'étanchéité (211) destinée à être appliquée contre la surface d'étanchéité (13) du premier embout (1),
- un écrou engagé librement sur le deuxième embout (2) derrière sa collerette (21) et vissé sur l'extrémité filetée (12) du premier embout (1) en tirant la collerette (21) pour appliquer sa surface d'étanchéité (211) contre la surface d'étanchéité (13) du premier embout (1) et réaliser l'étanchéité avec une contrainte déterminée, raccord **caractérisé en ce que** l'écrou comprend :
A) un écrou de base (3) en forme de manchon ayant :
- à une extrémité, un taraudage (31) pour se visser sur le segment fileté (12) du premier embout (1),
- une surface d'appui (32) à la suite du taraudage (31) pour pousser la collerette (21) du deuxième embout (2) et presser sa surface d'étanchéité (211) contre la surface d'étanchéité (13) du premier embout (1),
- une première couronne d'accrochage (33),
- un palier lisse (34),
B) un organe de serrage (4) venant sur le palier lisse (34) pour y tourner librement et ayant :
- une deuxième couronne d'accrochage (42) destinée à venir contre la première couronne (33) de l'écrou de base (3), et
- sur sa face opposée, une surface d'appui (43),
C) un ressort de compression (5) appliqué contre la surface d'appui (43) de l'organe de serrage (4),
D) un organe de précontrainte (6) sur l'écrou de base (3) pour presser l'organe de serrage (4) contre la couronne d'accrochage (33) de l'écrou de base (3) par l'intermédiaire du ressort de compression (5),
E) la deuxième couronne d'accrochage (42) étant reliée à la première couronne d'accrochage (33) pour transmettre par contact, le couple de serrage à l'écrou de base (3) se vissant sur le premier embout (1) jusqu'à un couple de consigne (CS) serrant élastiquement les deux couronnes d'accrochage (42/33), le dépassement du couple de consigne décrochant la deuxième couronne d'accrochage (42) de la première couronne d'accrochage (33) qui n'est plus entraînée.

2. Raccord (100) selon la revendication 1,
**caractérisé en ce que**
la première couronne d'accrochage (33) comporte un ensemble de rampes (331) périphériques et la deuxième couronne d'accrochage (42) comporte un ensemble de rampes (421) périphériques, les deux couronnes (33, 42) sont complémentaires de façon à transmettre le couple de serrage exercé par l'écrou de serrage (4) jusqu'au couple de consigne (CS).

3. Raccord (100) selon la revendication 1,
**caractérisé en ce que**
- l'écrou de base (3) a un segment fileté (35) après le palier lisse (34) recevant l'organe de serrage (4),
- l'organe de précontrainte (6) est vissé sur le segment fileté (35) de l'écrou de base pour être solidarisé de l'écrou de base (3),
- le ressort de compression (5) est entre l'organe de précontrainte (6) et la face d'appui (43) de l'organe de serrage opposée à celle de la deuxième couronne d'accrochage (42).

4. Raccord (100) selon la revendication 1,
**caractérisé en ce que**
l'écrou de base (3') a une collerette (36') dont la face (6') tournée vers la face (43') de l'organe de serrage (4') forme une surface d'appui,
la surface d'appui (6') et la surface d'appui (43') de l'organe de serrage (4') recevant entre elles le ressort de compression (5'),
- l'autre face (32') de la collerette (36') porte la première couronne d'accrochage (33'),
- l'organe de serrage (4') ayant un retour (45') et passant autour du ressort de compression (5') et de la collerette (36') pour venir contre la couronne d'accrochage (33') de la face (32') de la collerette (36').

5. Raccord (100) selon la revendication 4,
**caractérisé en ce que**
le retour (45') de l'organe de serrage (4') est un anneau démontable de l'organe de serrage (4'), solidarisé à cet organe de serrage (4') après la mise en place sur la partie lisse (34') de l'écrou de serrage (3') et la mise en place du ressort (5') en précontrainte entre la face (43') et la face (6') de la collerette (36').

6. Raccord (100) selon la revendication 1,
**caractérisé en ce que**
la surface d'étanchéité du deuxième embout (2, 2') est une lèvre d'étanchéité (211) ou une surface conique (211') et la surface d'étanchéité du premier embout (1, 1') est une surface plane (13) ou une surface conique (13').

7. Raccord (100) selon la revendication 1,
**caractérisé en ce que**
l'organe de serrage (4) est en forme d'écrou-chapeau dont la surface de prise d'outil (44) coiffe le ressort de compression (5) et l'organe de précontrainte (6).

8. Raccord (100) selon la revendication 1,
**caractérisé en ce que**
l'élément de ressort de compression (5) est un ressort Belleville ou une pile de ressort Belleville.

9. Raccord (100) selon l'une quelconque des revendications 1 à 8,
**caractérisé en ce que**
le premier embout (1) a une collerette de prise d'outil (11) munie de facettes (111) et au moins l'une des facettes comporte un repère de serrage, l'organe de serrage (4) comporte une surface de prise d'outil (43) munie de facettes (31) dont au moins l'une comporte un repère dont la position en fin de serrage du raccord correspond au repère de la facette (111) de la collerette du premier embout.

## Patentansprüche

1. Kupplung (100) zum Verbinden zweier Leitungen mit einem vorbestimmten Anziehdrehmoment, umfassend
- ein erstes Endstück (1), das dazu geeignet ist, an einer ersten Leitung (C1) befestigt zu werden,
- ein zweites Endstück (2), das dazu geeignet ist, an einer zweiten zu verbindenden Leitung (C2) befestigt zu werden,
- wobei das erste Endstück (1), das mit einem Werkzeugangriffsbund (11) versehen ist, mit einem Gewinde (12) und einer Dichtfläche (13) endet,
- das zweite Endstück (2) weist einen Bund (21) auf, der mit einer Dichtfläche (211) endet, welche dazu bestimmt ist, gegen die Dichtfläche (13) des ersten Endstücks (1) angelegt zu werden,
- eine Mutter, die frei auf dem zweiten Endstück (2) hinter dessen Bund (21) aufgenommen ist und auf das Gewindeende (12) des ersten Endstücks (1) aufgeschraubt wird, wobei sie den Bund (21) anzieht, um dessen Dichtfläche (211) gegen die Dichtfläche (13) des ersten Endstücks (1) anzulegen und die Abdichtung mit einer bestimmten Vorspannung herzustellen, wobei die Kupplung **dadurch gekennzeichnet ist, dass** die Mutter Folgendes umfasst:
A) eine Basismutter (3) in Form einer Hülse, aufweisend:
- an einem Ende ein Innengewinde (31) zum Aufschrauben auf den Gewindeabschnitt (12) des ersten Endstücks (1),
- eine an das Innengewinde (31) anschließende Anlagefläche (32) zum Drücken gegen den Bund (21) des zweiten Endstücks (2) und zum Anpressen von dessen Dichtfläche (211) gegen die Dichtfläche (13) des ersten Endstücks (1),
- einen ersten Rastkranz (33),
- ein Gleitlager (34),
B) ein Spannorgan (4), das auf dem Gleitlager (34) angeordnet ist, um sich darauf frei drehen zu können, und mit:
- einem zweiten Rastkranz (42), der dazu bestimmt ist, gegen den ersten Rastkranz (33) der Basismutter (3) zu gelangen, und
- einer Anlagefläche (43) auf seiner gegenüberliegenden Stirnseite,
C) eine Druckfeder (5), die gegen die Anlagefläche (43) des Spannorgans (4) anliegt,
D) ein Vorspannorgan (6) an der Basismutter (3), um das Spannorgan (4) mittels der Druckfeder (5) gegen den Rastkranz (33) der Basismutter (3) zu drücken,
E) wobei der zweite Rastkranz (42) mit dem ersten Rastkranz (33) in Eingriff steht, um das Anziehdrehmoment durch Kontakt auf die Basismutter (3) zu übertragen, die auf das erste Endstück (1) aufgeschraubt wird, bis ein Soll-Anziehdrehmoment (CS) erreicht ist, bei dem die beiden Rastkränze (42/33) elastisch gegeneinander verspannt sind, wobei das Überschreiten des Soll-Anziehdrehmoments den zweiten Rastkranz (42) vom ersten Rastkranz (33) löst, der dann nicht mehr angetrieben wird.

2. Kupplung (100) nach Anspruch 1,
**dadurch gekennzeichnet, dass**
der erste Rastkranz (33) eine Mehrzahl von am Umfang angeordneten Rampen (331) umfasst und der zweite Rastkranz (42) eine Mehrzahl von am Umfang angeordneten Rampen (421) umfasst, wobei die beiden Rastkränze (33, 42) komplementär ausgebildet sind, sodass das vom Spannorgan (4) ausgeübte Anziehdrehmoment bis zum Soll-Anziehdrehmoment (CS) übertragen wird.

3. Kupplung (100) nach Anspruch 1,
**dadurch gekennzeichnet, dass**
- die Basismutter (3) nach dem Gleitlager (34), das das Spannorgan (4) aufnimmt, einen Gewindeabschnitt (35) aufweist,
- das Vorspannorgan (6) auf den Gewindeabschnitt (35) der Basismutter aufgeschraubt ist, um mit der Basismutter (3) verbunden zu sein,
- die Druckfeder (5) zwischen dem Vorspannorgan (6) und der Anlagefläche (43) des Spannorgans angeordnet ist, die derjenigen mit dem zweiten Rastkranz (42) gegenüberliegt.

4. Kupplung (100) nach Anspruch 1,
**dadurch gekennzeichnet, dass**
die Basismutter (3') einen Bund (36') aufweist, dessen der Anlagefläche (43') des Spannorgans (4') zugewandte Stirnseite (6') eine Anlagefläche bildet,
die Anlagefläche (6') und die Anlagefläche (43') des Spannorgans (4') zwischen sich die Druckfeder (5') aufnehmen,
- die andere Stirnseite (32') des Bundes (36') den ersten Rastkranz (33') trägt,
- das Spannorgan (4') einen umgebogenen Abschnitt (45') aufweist und die Druckfeder (5') sowie den Bund (36') umgreift, um gegen den Rastkranz (33') an der Stirnseite (32') des Bundes (36') zu gelangen.

5. Kupplung (100) nach Anspruch 4,
**dadurch gekennzeichnet, dass**
der umgebogene Abschnitt (45') des Spannorgans (4') einen vom Spannorgan (4') lösbaren Ring bildet, der nach dem Aufsetzen des Spannorgans (4') auf den glatten Abschnitt (34') der Basismutter (3') und nach dem Einsetzen der Druckfeder (5') in Vorspannung zwischen der Stirnseite (43') und der Stirnseite (6') des Bundes (36') mit dem Spannorgan verbunden wird.

6. Kupplung (100) nach Anspruch 1,
**dadurch gekennzeichnet, dass**
die Dichtfläche des zweiten Endstücks (2, 2') eine Dichtlippe (211) oder eine konische Dichtfläche (211') ist und die Dichtfläche des ersten Endstücks (1, 1') eine ebene Dichtfläche (13) oder eine konische Dichtfläche (13') ist.

7. Kupplung (100) nach Anspruch 1,
**dadurch gekennzeichnet, dass**
das Spannorgan (4) in Form einer Hutmutter ausgebildet ist, deren Werkzeugangriffsfläche (44) die Druckfeder (5) und das Vorspannorgan (6) überdeckt.

8. Kupplung (100) nach Anspruch 1,
**dadurch gekennzeichnet, dass**
das Druckfederelement (5) ist eine Belleville-Feder oder ein Belleville-Federstapel.

9. Kupplung (100) nach einem der Ansprüche 1 bis 8,
**dadurch gekennzeichnet, dass**
das erste Endstück (1) einen Werkzeugangriffsbund (11) mit Schlüsselflächen (111) aufweist und mindestens eine der Schlüsselflächen eine Anzugsmarkierung trägt, und dass das Spannorgan (4) eine Werkzeugangriffsfläche (43) mit Schlüsselflächen (31) umfasst, wobei mindestens eine der Schlüsselflächen eine Markierung trägt, deren Stellung nach Abschluss des Anziehvorgangs der Kupplung der Markierung auf der Schlüsselfläche (111) des Werkzeugangriffsbundes des ersten Endstücks entspricht.

## Claims

1. Connector (100) for joining two conduits with a predetermined clamping torque, comprising
- a first end-piece (1) which is capable of being fixed to a first conduit (C1),
- a second end-piece (2) which is capable of being fixed to a second conduit (C2) to be joined together,
- the first end-piece (1) provided with a tool receiving collar (11) being terminated with a thread (12) and a sealing surface (13),
- the second end-piece (2) has a collar (21) which is terminated by a sealing surface (211) which is intended to be applied against the sealing surface (13) of the first end-piece (1),
- a nut which is freely engaged on the second end-piece (2) behind the collar (21) thereof and screwed onto the threaded end (12) of the first end-piece (1) pulling the collar (21) in order to apply the sealing surface (211) thereof against the sealing surface (13) of the first end-piece (1) and to produce the sealing with a predetermined stress,
which connector is **characterised in that** the nut comprises:
A) a base nut (3) in the form of a sleeve having:
- at one end, a thread (31) for being screwed onto the threaded segment (12) of the first end-piece (1),
- a support surface (32) following the thread (31) in order to push the collar (21) of the second end-piece (2) and to press the sealing surface (211) thereof against the sealing surface (13) of the first end-piece (1),
- a first fastening ring (33),
- a plain bearing (34),
B) a clamping member (4) which moves on the plain bearing (34) in order to rotate freely at that location and which has:
- a second fastening ring (42) which is intended to move against the first ring (33) of the base nut (3), and
- on the opposite face thereof, a support surface (43),
C) a compression spring (5) which is applied against the support surface (43) of the clamping member (4),
D) a pretensioning member (6) on the base nut (3) in order to press the clamping member (4) against the fastening ring (33) of the base nut (3) by means of the compression spring (5),
E) the second fastening ring (42) being connected to the first fastening ring (33) in order to transmit via contact the clamping torque to the base nut (3) being screwed onto the first end-piece (1) as far as a setpoint torque (CS) which resiliently clamps the two fastening rings (42/33), exceeding the setpoint torque disengaging the second fastening ring (42) from the first fastening ring (33) which is no longer driven.

2. Connector (100) according to claim 1,
**characterised in that**
the first fastening ring (33) comprises an assembly of peripheral ramps (331) and the second fastening ring (42) comprises an assembly of peripheral ramps (421), the two rings (33, 42) are complementary in order to transmit the clamping torque applied by the clamping nut (4) as far as the setpoint torque (CS).

3. Connector (100) according to claim 1,
**characterised in that**
- the base nut (3) has a threaded segment (35) after the plain bearing (34) which receives the clamping member (4),
- the pretensioning member (6) is screwed onto the threaded segment (35) of the base nut in order to be fixedly joined to the base nut (3),
- the compression spring (5) is between the pretensioning member (6) and the support face (43) of the clamping member opposite that of the second fastening ring (42).

4. Connector (100) according to claim 1,
**characterised in that**
the base nut (3') has a collar (36') whose face (6') which is turned towards the face (43') of the clamping member (4') forms a support surface, the support surface (6') and the support surface (43') of the clamping member (4') receiving the compression spring (5') between them,
- the other face (32') of the collar (36') carries the first fastening ring (33'),
- the clamping member (4') having a return member (45') and passing around the compression spring (5') and the collar (36') in order to move against the fastening ring (33') of the face (32') of the collar (36').

5. Connector (100) according to claim 4,
**characterised in that**
the return member (45') of the clamping member (4') is a ring which can be removed from the clamping member (4') which is fixedly joined to this clamping member (4') after the clamping nut (3') has been placed on the smooth portion (34') and the spring (5') has been placed under pretension between the face (43') and the face (6') of the collar (36').

6. Connector (100) according to claim 1,
**characterised in that**
the sealing surface of the second end-piece (2, 2') is a sealing lip (211) or a conical surface (211') and the sealing surface of the first end-piece (1, 1') is a planar surface (13) or a conical surface (13').

7. Connector (100) according to claim 1,
**characterised in that**
the clamping member (4) is in the form of a union nut whose tool receiving surface (44) covers the compression spring (5) and the pretensioning member (6).

8. Connector (100) according to claim 1,
**characterised in that**
the compression spring element (5) is a Belleville spring or a stack of Belleville springs.

9. Connector (100) according to any one of claims 1 to 8,
**characterised in that**
the first end-piece (1) has a tool receiving collar (11) which is provided with faces (111) and at least one of the faces comprises a clamping reference system, the clamping member (4) comprises a tool receiving surface (43) which is provided with faces (31), at least one of which comprises a reference system whose position at the end of clamping of the connector corresponds to the reference system of the face (111) of the collar of the first end-piece.
